# EUROPEAN PATENT APPLICATION

(11) **EP 4 311 732 A1**
(43) Date of publication of application: **31.01.2024**
(21) Application number: 22187722.8
(22) Date of filing: 29.07.2022
(51) Int. Cl.: B60R 25/24, H04L 9/08, H04L 9/32, H04W 4/40, H04W 12/0471

(54) **A CONCEPT FOR SERVER-BASED SHARING OF DIGITAL KEYS**

(71) Applicant: Bayerische Motoren Werke Aktiengesellschaft, 80809 München (DE)
(72) Inventor: Hippler, Marco, 81541 München (DE); Knott, Thorsten, 83104 Tuntenhausen (DE); Mang, Klemens, 81679 München (DE); Knobloch, Daniel, Cupertino, CA 95014 (US); Reinhart, Lukas, 85354 Freising (DE)

(57) **Abstract**

Examples relate to a concept for server-based sharing of digital keys, and more specifically, but not exclusively, to apparatuses, methods, and computer programs for a digital vehicle key sharing server, for a second server and for a first device. The apparatus (10) for the digital vehicle key sharing server (100) is configured to obtain, via interface circuitry, a request for sharing a digital vehicle key for one or more vehicles to a second device (200; 250) from a first device (300), determine, whether the second device specified by the request is a user device (250) or a server (200), and process the request for sharing the digital vehicle key based on whether the second device specified by the request is a user device or a server.

## Description

### Field

Examples relate to a concept for server-based sharing of digital keys, and more specifically, but not exclusively, to apparatuses, methods, and computer programs for a digital vehicle key sharing server, for a second server and for a first device.

### Background

The Digital Car Key defined in the Car Connectivity Consortium's (CCC) standard release 2 and 3 standardizes an access system comprising smart devices, a vehicle and backend systems. The smart devices use software that carry a digital key embedded in secure storage on the smart device, offer interfaces from the secure storage to the smartphone operating system and offer interfaces from the smartphone operating system to other applications running on the smartphone (e.g., a vehicle OEM's app). The vehicle allows carriers of a digital key to operate certain vehicle functionalities. The backend systems interconnect the smart devices and vehicles, allowing to share and manage digital keys and offer additional services.

In general, digital keys for a particular vehicle can only be shared by the owner key of the particular vehicle. Key sharing is a multi-step process, in which the owner first configures the parameters of the digital key to be created ("key creation request") and passes them to the "sharee" device (via a Relay Server). After creation of the key by the sharee device (in its secure element) and the export of an "endpoint certificate" containing the parameters the key has been created with, the sharee device sends back a key signing request to the owner including the sharee's certificate chain and the owner attests that the key has been created according to the key creation request by signing the endpoint certificate with their (endpoint's) private key ("key sharing attestation"). The public key of the owner is known to the vehicle through the owner pairing process. Optionally, the sharee sends a key tracking request to a Key Tracking Server.

During first contact of the sharee with the vehicle, using the public key of the owner, the vehicle verifies the owner signature over the sharee key (included in the attestation package) to make sure the presented key is legit. After signature verification the sharee key can be used for engine start

However, in the above system, it is only possible to share keys from one paired owner device, as only this device contains the necessary private key. Moreover, it is not possible for a sharee key to further share keys, nor is it possible for the owner to delegate sharing rights to another key or entity.

There may be a desire for an improved concept for key sharing of digital key for a vehicle.

### Summary

This desire is addressed by the subject-matter of the independent claims.

The concept proposed in the present disclosure is based on the finding, that a server-based approach can be used to mitigate the above-mentioned drawbacks. Instead of having the device of the sharer/owner (in the following denoted "first device") sign the digital car key being shared, the sharer device is merely used to trigger the sharing process at a digital vehicle key sharing server. To support both direct sharing to a sharee device (denoted "user device" in the following) and indirect sharing via another server (denoted "second server" in the following, which may be a server of a car sharing service), the owner device or entity with sharing rights sends a request for sharing a digital vehicle key for one or more vehicles to a second device, with the request indicating whether the second device is a user device or a server. The digital vehicle key sharing server can then take the appropriate actions depending on whether the second device is a sharee device or a second device.

Some aspects of the present disclosure relate to an apparatus for a digital vehicle key sharing server, the apparatus comprising interface circuitry and processing circuitry. The processing circuitry is configured to obtain, via the interface circuitry, a request for sharing a digital vehicle key for one or more vehicles to a second device from a first device. The processing circuitry is configured to determine, whether the second device specified by the request is a user device or a server. The processing circuitry is configured to process the request for sharing the digital vehicle key based on whether the second device specified by the request is a user device or a server. By involving the digital vehicle key sharing server, the sharing is not tied to a single device of the vehicle owner. Moreover, the sharing process is untied from the device, such that the sharing can be performed even while the owner device is offline. Finally, both direct sharing to Sharee devices (i.e., user devices) and indirect sharing (via a second server) is enabled, using the same mechanism.

For example, the processing circuitry may be configured to verify the request for sharing a digital vehicle key based on a public key of the first device contained in a storage comprising one or more public keys allowed to issue a request for sharing a digital vehicle key for the one or more vehicles. Hereby, the same mechanism can be used for sharing by the first device and sharing by a second server. Moreover, additional devices of the owner can be added to the devices allowed to issue a request for sharing a digital vehicle key for the one or more vehicles

In some examples, the processing circuitry may be configured to, if the second device is a server, add a public key of the second device to the storage comprising one or more public keys allowed to issue a request for sharing a digital vehicle key. Once the second server's public key is part of the storage, the second server may be authorized to issue a request for sharing a digital vehicle key.

In various examples, the processing circuitry may be configured to, if the second device is a server, sign the public key of the second device using a private key of the digital vehicle key sharing server, and provide the signed public key of the second device to the second device for future authentication. This signed public key may subsequently used by the second server to authenticate vis-à-vis the digital vehicle key sharing server.

The processing circuitry may be configured to obtain, via the interface circuitry, a second request for sharing a digital vehicle key for a vehicle to a user device from the second device being a server, and to provide to the user device, via the second device or directly, an invitation to provide a public key of a digital vehicle key for signing to the digital vehicle key sharing server. For example, the public key of the digital vehicle key may be part of an attestation comprising the public key and information of entitlements of the digital vehicle key. Accordingly, processing circuitry may be configured provide to the user device, via the second device or directly, an invitation to provide an attestation comprising a public key of a digital vehicle key for signing to the digital vehicle key sharing server. The same mechanism may be used for the second device being a user device as well. Accordingly, the processing circuitry may be configured to provide to the second device (being a user device or server), via the first device or directly, an invitation to provide a public key of a digital vehicle key (or an attestation comprising the public key) for signing to the digital vehicle key sharing server. The user device or second server may use the invitation to have their respective public key signed by the digital vehicle key sharing server.

According to an example, the processing circuitry may be configured to obtain, via the interface circuitry, a request for signing the public key of the digital vehicle key (or the attestation comprising the public key) from the second device (e.g., from the user device or from the second server), sign the public key of the digital vehicle key (e.g., the attestation with the public key) using a private key of the digital vehicle key sharing server, and provide the signed public key of the digital vehicle key (e.g., the signed attestation comprising the public key) to the second device (e.g., to the user device or to the second server). As discussed above, the request for signing the public key of the digital vehicle key or attestation may be obtained in response to the invitation to provide the public key of the digital vehicle key. In the vehicle, the public key of the digital vehicle key sharing server is stored in a key store. The signed public key of the digital vehicle key, e.g., the signed attestation, may then be used to authenticate the user device (or second server) vis-à-vis the vehicle, which may use the public key of the digital vehicle key sharing server to verify the signed public key of the digital vehicle key or attestation.

According to an example, the user device may be the second device, or the user device may be a user device having requested the signing of the public key of the digital vehicle key (or attestation) via the second device (being a server). In other words, both direct key sharing and indirect key sharing are supported.

In various examples, the request for sharing a digital vehicle key may comprise authentication verification information. The processing circuitry may be configured to verify the request for signing the public key of the digital vehicle key (or attestation) on the authentication verification information. This may provide additional security in case the invitation is provided, e.g., by the second server or the first device, to the "wrong" recipient.

In some examples, the authentication verification information may comprise one of a public key of the second device, information derived from a user account identifier associated with the user device, and information derived from a phone number associated with the user device. These features may all be used to tie the invitation to a specific device or user account.

Some aspects of the present disclosure relate to an apparatus for a second server. The apparatus comprises interface circuitry and processing circuitry. The processing circuitry is configured to obtain, via the interface circuitry, a first request for access to a vehicle from a user device. The processing circuitry is configured to provide a second request for sharing a digital vehicle key for the vehicle to a digital vehicle key sharing server based on the first request. In other words, the second server acts as an intermediary between the user device and the digital vehicle key sharing server. Prior to taking the intermediary role, the public key of the second server may have been added to the storage comprising one or more public keys allowed to issue a request for sharing a digital vehicle key.

In some examples, the processing circuitry may be configured to obtain, via the interface circuitry, a public key of the user device. The second request may comprise the public key of the user device. This may enable one form of authentication of the user device. Alternatively, or additionally, the user device may comprise the aforementioned information on the user account identifier associated with the user device, or the information derived from the phone number associated with the user device.

According to an example, the processing circuitry may be configured to obtain an invitation to provide a public key of a digital vehicle key (or an attestation comprising the public key) of the user device for signing to the digital vehicle key sharing server, and to forward the invitation to the user device. This invitation may then enable the user device to provide the public key of a digital vehicle key (e.g., the attestation with the public key) of the user device for signing to the digital vehicle key sharing server.

Some aspects of the present disclosure relate to an apparatus for a first device. The apparatus comprises interface circuitry and processing circuitry. The processing circuitry is configured to generate a request for sharing a digital vehicle key for one or more vehicles to a second device. The request indicates whether the second device specified by the request is a user device or a server. The processing circuitry is configured to provide the request to a digital vehicle key sharing server. The digital vehicle key sharing server may then take the appropriate actions, as outlined above.

For example, the request may comprise information on the one or more vehicles being shared and information on the second device. The former information may be used by the digital vehicle key sharing server to determine the extent of the sharing, and the latter information may be used by the digital vehicle key sharing server to determine the recipient of the sharing.

Some aspects of the present disclosure relate to a method for a digital vehicle key sharing server. The method comprises obtaining a request for sharing a digital vehicle key for one or more vehicles to a second device from a first device. The method comprises determining, whether the second device specified by the request is a user device or a server. The method comprises processing the request for sharing the digital vehicle key based on whether the second device specified by the request is a user device or a server.

Some aspects of the present disclosure relate to a method for a second server. The method comprises obtaining a first request for access to a vehicle from a user device. The method comprises providing a second request for sharing a digital vehicle key for the vehicle to a digital vehicle key sharing server based on the first request.

Some aspects of the present disclosure relate to a method for a first device. The method comprises generating a request for sharing a digital vehicle key for one or more vehicles to a second device. The request indicates whether the second device specified by the request is a user device or a server. The method comprises providing the request to a digital vehicle key sharing server.

An aspect of the present disclosure relates to a computer program having a program code for performing one of the above methods, when the computer program is executed on a computer, a processor, or a programmable hardware component.

### Brief description of the Figures

Some examples of apparatuses and/or methods will be described in the following by way of example only, and with reference to the accompanying figures, in which
Fig. 1a shows a schematic diagram of an example of an apparatus for a digital vehicle key sharing server, of a digital vehicle key sharing server comprising such an apparatus;
Fig. 1b shows a flow chart of an example of a method for a digital vehicle key sharing server;
Fig. 1c shows a schematic diagram of an example of a system comprising a digital vehicle key sharing server, a first device and a second device being a user device;
Fig. 1d shows a schematic diagram of an example of a system comprising a digital vehicle key sharing server, a first device, a second device being a second server, and a user device;
Fig. 2a shows a schematic diagram of an example of an apparatus for a second server and of a second server comprising such an apparatus;
Fig.2b shows a flow chart of an example of a method for a second server;
Fig. 3a shows a schematic diagram of an example of an apparatus for a first device and of a first device comprising such an apparatus;
Fig. 3b shows a flow chart of an example of a method for a first device;
Fig. 4 shows a sequence diagram of an example of server-based key sharing to a user device;
Fig. 5 shows a sequence diagram of an example of registering a car sharing server at a digital vehicle key sharing server; and
Fig. 6 shows a sequence diagram of an abbreviated example of server-based key sharing to a user device via car sharing server.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

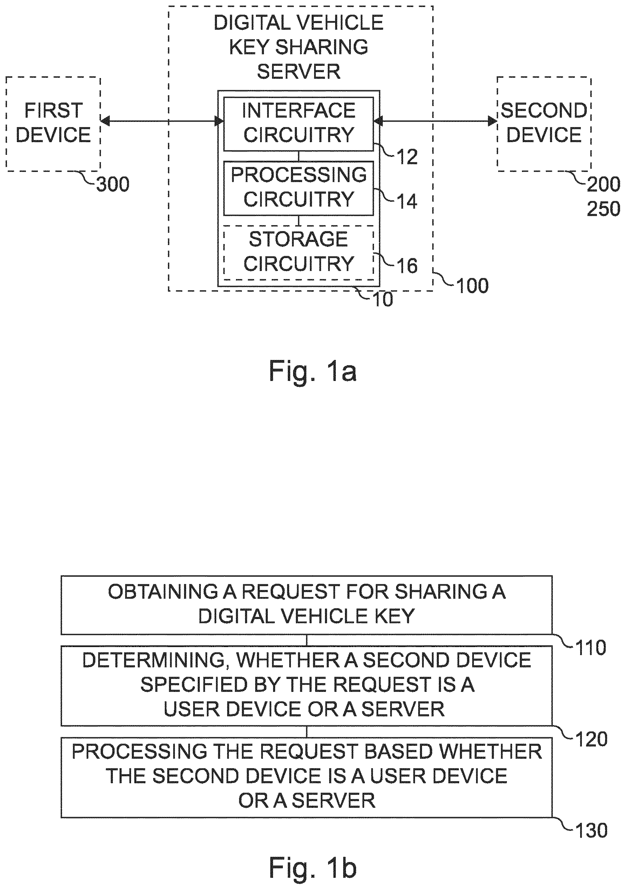

Fig. 1a shows a schematic diagram of an example of an apparatus 10 for a digital vehicle key sharing server 100 and of a digital vehicle key sharing server 100 comprising such an apparatus 10. The apparatus 10 comprises circuitry that is configured to provide the functionality of the apparatus 10. For example, the apparatus 10 of Fig. 1a comprises interface circuitry 12, processing circuitry 14 and (optional) storage circuitry 16. For example, the processing circuitry 14 may be coupled with the interface circuitry 12 and with the storage circuitry 16. For example, the processing circuitry 14 may be configured to provide the functionality of the apparatus, in conjunction with the interface circuitry 12 (for exchanging information, e.g., with other devices, such as a first device 100, a second server 200 or a user device 250) and the storage circuitry 16 (for storing information, such as machine-readable instructions). In general, the functionality of the processing circuitry 14 may be implemented by the processing circuitry 14 executing machine-readable instructions. Accordingly, any feature ascribed to the processing circuitry 14 may be defined by one or more instructions of a plurality of machine-readable instructions. The apparatus 10 may comprise the machine-readable instructions, e.g., within the storage circuitry 16.

The processing circuitry 14 is configured to obtain, via the interface circuitry 12, a request for sharing a digital vehicle key for one or more vehicles to a second device 200, 250 from the first device 300. The processing circuitry 14 is configured to determine, whether the second device specified by the request is a user device 250 or a server 200. The processing circuitry is configured to process the request for sharing the digital vehicle key based on whether the second device specified by the request is a user device or a server.

Fig. 1b shows a flow chart of an example of a corresponding method for the digital vehicle key sharing server 100. The method comprises obtaining 110 a request for sharing a digital vehicle key for one or more vehicles to a second device from a first device. The method comprises determining 120, whether the second device specified by the request is a user device or a server. The method comprises processing 130 the request for sharing the digital vehicle key based on whether the second device specified by the request is a user device or a server. For example, the method may be performed by the digital vehicle key sharing server 100.

In the following, the features of the apparatus 10, the digital vehicle key sharing server 100 and of the corresponding method (and computer program) are discussed with respect to the apparatus 10. Features introduced in connection with the apparatus 10 may likewise be included in the corresponding digital vehicle key sharing server, method, and computer program.

The process starts with the request for sharing a digital vehicle key for one or more vehicles to a second device 200, 250. This request is issued by the first device 300, which is a user device (such as a smartphone, a computer, a wearable device etc.) of the owner (also denoted "Sharer" of the vehicle). While the present examples assume that the first device is a user device, the proposed concept can also be used in a purely server-based constellation, where the first device is also a server that requests to share a digital vehicle key with a user device or with another server. While, in some systems, the first device 300 is responsible for signing the digital vehicle key, this task is, in the proposed concept, delegated to the digital vehicle key sharing server. However, for compatibility reasons, the signing of the digital vehicle key may still be performed by the first device (in addition to the digital vehicle key sharing server).

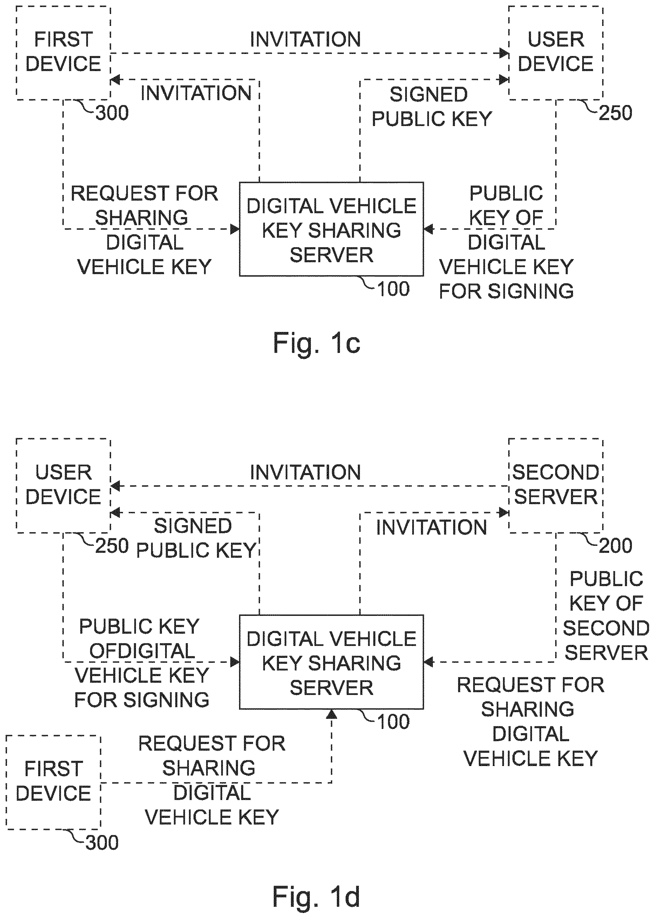

In the proposed concept, two cases are distinguished - in a first case, the first device requests the shared digital vehicle key for a user device (e.g., a smartphone, a computer, a wearable device etc.), and in the second case, the first device requests the shared digital vehicle key for another server (i.e., the "second server"). In the following, the first case is also denoted direct sharing, while the second case is denoted indirect or delegated sharing. The first case is illustrated in Fig. 1c, and the second case is illustrated in Fig. 1d.

Fig. 1c shows a schematic diagram of an example of a system comprising the digital vehicle key sharing server 100, the first device 300 and the second device being a user device 250. In this case, the first device 300 requests the digital vehicle key sharing server to issue the shared digital vehicle key for the user device 250. Fig. 1d shows a schematic diagram of an example of a system comprising the digital vehicle key sharing server 100, the first device 300, the second device being a second server 200, and a user device 250. In this case, the first device 300 requests the digital vehicle key sharing server to allow the second device being the second server 200 to issue requests for shared digital vehicle keys. The second server may thus request the digital vehicle key sharing server to issue a shared digital vehicle key for the user device 250 (instead of the user device).

To distinguish these two cases, the requests indicates the "type" of the second device, i.e., whether the second device is a user device or a server. The processing circuitry then processes the request to determine, whether the second device specified by the request is a user device 250 or a server 200 and process the request for sharing the digital vehicle key based on whether the second device specified by the request is a user device or a server.

As further shown in Fig. 1c, in the first case, i.e., if the requests indicates that the second device is a user device, the processing circuitry may be configured to provide to the second device being a user device, via the first device or directly, an invitation to provide a public key of a digital vehicle key (e.g., an attestation comprising the public key of the digital vehicle key) for signing to the digital vehicle key sharing server. In particular, this invitation may comprise a uniform resource locator (URL) the user device can access to have a digital vehicle key (or attestation comprising a public key of the digital vehicle key) signed by the digital vehicle key sharing server. In the proposed concept, the user device is provided with key parameters for generating the digital vehicle key, with the digital vehicle key being generated by the user device (e.g., within a secure element/secure enclave/trusted execution environment of the user device). For example, the digital vehicle key being generated by the user device comprises the aforementioned attestation, which may, in turn, comprise a public key of the digital vehicle key, along with information on entitlements conveyed by the digital vehicle key. For example, the digital vehicle kay may comprise a key pair comprising the public key and a private key. After being generated, the public key of the digital vehicle key, or the attestation with the public key, may be provided, by the user device, to the digital vehicle key sharing server for signing. In consequence, the processing circuitry may be configured to obtain, via the interface circuitry, a request for signing the public key of the digital vehicle key or attestation from the user device, sign the public key of the digital vehicle key (e.g., the attestation with the public key) using a private key of the digital vehicle key sharing server, and provide the signed public key of the digital vehicle key (e.g., the signed attestation) to the user device (via the interface circuitry). For example, the request for signing the public key of the digital vehicle key or attestation may be obtained in response to the invitation to provide the public key of the digital vehicle key or attestation. The user device may provide the signed public key to the vehicle (e.g., as part of the attestation), with the vehicle using the signed public key (e.g., the signed attestation with the public key) to verify the digital vehicle key used by the user device, with a public key of the digital vehicle key sharing server being stored in the vehicle being used to perform the verification.

In the present disclosure, the terms "signature", "sign" and "certificate" may be used synonymously. For example, if the digital vehicle key sharing server signs the public key of the digital vehicle key (or a public key of the second server), it may generate, using its private key, a digital signature, or a digital certificate, based on the respective public key. Therefore, the "signed public key" or "signed attestation" may correspond to a digital certificate that is based on the respective public key or attestation.

In the second case, the second server is added to a list of entities allowed to issue a request for sharing a digital vehicle key. For example, the processing circuitry may be configured to, if the second device is a server, add a public key of the second device to a storage (e.g., within the storage circuitry 16) comprising one or more public keys allowed (i.e., corresponding to entities allowed) to issue a request for sharing a digital vehicle key. For example, the public key of the second server may be contained in the request for sharing the digital vehicle key obtained from the first device. The processing circuitry may be configured to extract the public key of the second server from the request. Moreover, the processing circuitry may be configured to verify the request for sharing a digital vehicle key based on a public key of the first device contained in the storage comprising one or more public keys allowed to issue a request for sharing a digital vehicle key for the one or more vehicles. For example, the storage may be supported by a database, comprising an association between vehicles and entities/public keys being allowed to issue a request for sharing a digital vehicle key for the respective vehicle. When the first device is first paired with the vehicle, the first device's public key may be added to the storage (and thus the database).

In some examples, the second server may also be supplied with a signed public key (or attestation) of a digital vehicle key. For this purpose, the same mechanism may be used that has been used for the second device being a user device. For example, the processing circuitry may be configured to provide to the second device being a server, via the first device or directly, an invitation to provide a public key of a digital vehicle key (e.g., an attestation comprising the public key of the digital vehicle key) for signing to the digital vehicle key sharing server. For example, the second server may be provided with key parameters for generating the digital vehicle key, with the digital vehicle key being generated by the second server (e.g., within a secure element/secure enclave/trusted execution environment of the second server).. After being generated, the public key of the digital vehicle key, or the attestation with the public key, may be provided, by the second server, to the digital vehicle key sharing server for signing. In consequence, the processing circuitry may be configured to obtain, via the interface circuitry, a request for signing the public key of the digital vehicle key or attestation from the second server, sign the public key of the digital vehicle key (e.g., the attestation with the public key) using a private key of the digital vehicle key sharing server, and provide the signed public key of the digital vehicle key (e.g., the signed attestation) to the second server (via the interface circuitry).

In addition to storing the public key of the second server in the storage, the public key may be signed (i.e., a signature or a certificate may be generated based on the private key of the digital vehicle key sharing server) by the digital vehicle key sharing server. For example, the processing circuitry may be configured to, if the second device is a server, sign the public key of the second device using a private key of the digital vehicle key sharing server, and provide the signed public key of the second device to the second device for future authentication.

Once the second server is known to be allowed to issue request for shared vehicle keys, it may provide requests for sharing a digital vehicle key as well (e.g., on behalf of its clients, or to delegate sharing to yet another server). For example, the processing circuitry may be configured to obtain, via the interface circuitry, a second request for sharing a digital vehicle key for a vehicle to a user device from the second device being a server, and to provide to the user device, via the second device or directly, an invitation to provide a public key of a digital vehicle key (e.g., an attestation comprising the public key) for signing to the digital vehicle key sharing server. Again, the processing circuitry may be configured to obtain, via the interface circuitry, in response to the invitation, a request for signing the public key of the digital vehicle key (e.g., the attestation with the public key) from the user device, sign the public key of the digital vehicle key (e.g., the attestation with the public key) using a private key of the digital vehicle key sharing server, and provide the signed public key of the digital vehicle key to the user device. In consequence, the user device may itself be the second device (first case), or the user device may be a user device having requested the signing of the public key of the digital vehicle key via the second device (second case).

In some cases, requests for signing the public key of a digital vehicle key (or attestation) may be verified, to avoid the public key of the digital vehicle key of a "wrong" user device being signed (e.g., as the "wrong" user device has intercepted the invitation). For example, the request for sharing the digital vehicle key may comprise authentication verification information (a public key of the user device, information (e.g., a hash) derived from a user account identifier associated with the user device, and information (e.g., a hash) derived from a phone number associated with the user device). The digital vehicle key sharing server may use the authentication verification information to verify the request for signing the public key of a digital vehicle key (or attestation). In other words, the processing circuitry may be configured to verify the request for signing the public key of the digital vehicle key (or attestation) from the user device based on the authentication verification information. For example, the public key of the digital vehicle key may be derived from a private key of a key pair comprising the public key of the user device. The public key of the digital vehicle key may thus be verified against the public key of the user device. Moreover, the public key of the digital vehicle key or the attestation may comprise, as metadata, more information about the user device, such as the user account identifier (or a hash thereof) and/or the phone number (or a hash thereof), which may be verified against the information derived from the user account identifier associated with the user device, and the information derived from the phone number associated with the user device, respectively.

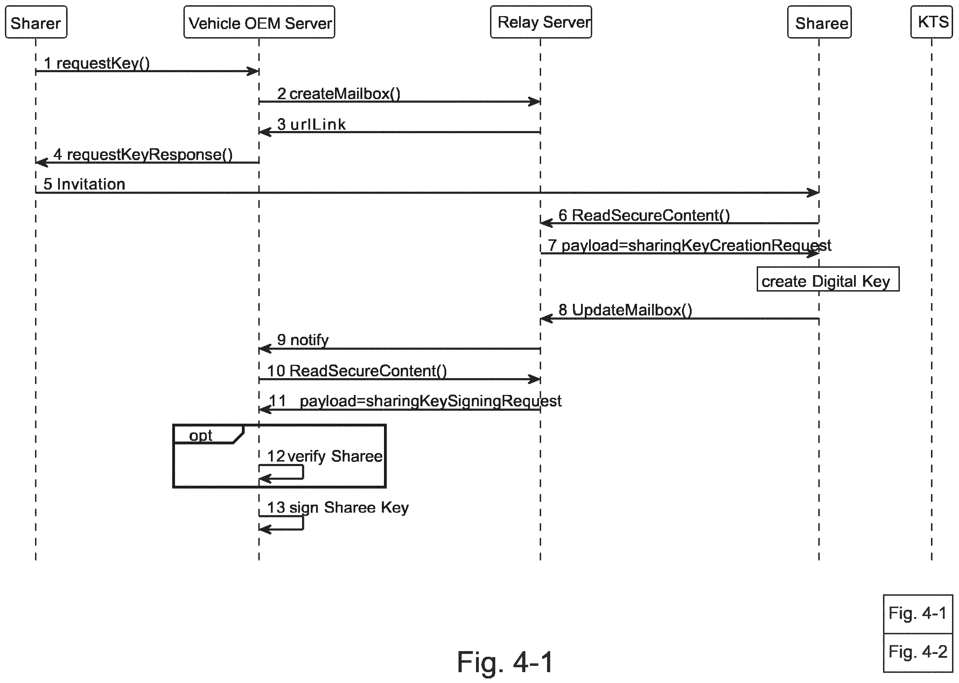

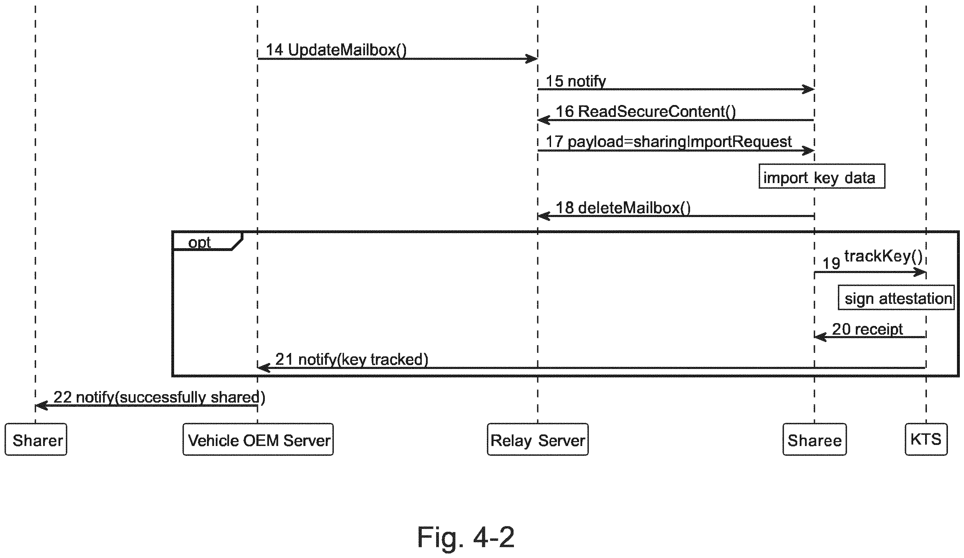

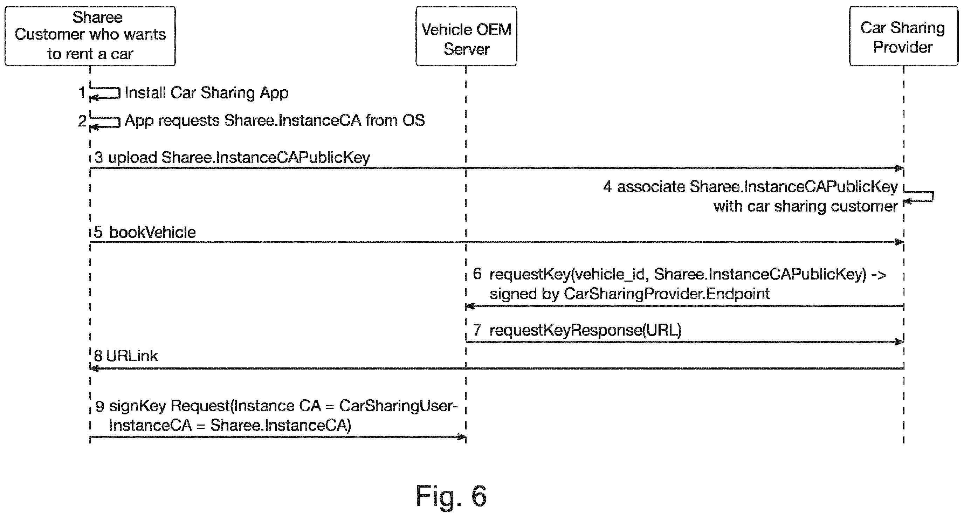

More details on the communication between the first device, the digital vehicle key sharing server and the user device can be found in Fig. 4 (with the first device being the Sharer in Fig. 4, the digital vehicle key sharing server being the Vehicle OEM Server and the user device being the Sharee). More details on the delegated sharing can be found in Fig. 6 (with the second server being the Car Sharing Provider).

The interface circuitry 12 may correspond to one or more inputs and/or outputs for receiving and/or transmitting information, which may be in digital (bit) values according to a specified code, within a module, between modules or between modules of different entities. For example, the interface circuitry 12 may comprise circuitry configured to receive and/or transmit information.

For example, the processing circuitry 14 may be implemented using one or more processing units, one or more processing devices, any means for processing, such as a processor, a computer or a programmable hardware component being operable with accordingly adapted software. In other words, the described function of the processing circuitry 14 may as well be implemented in software, which is then executed on one or more programmable hardware components. Such hardware components may comprise a general-purpose processor, a Digital Signal Processor (DSP), a micro-controller, etc.

For example, the storage circuitry 16 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

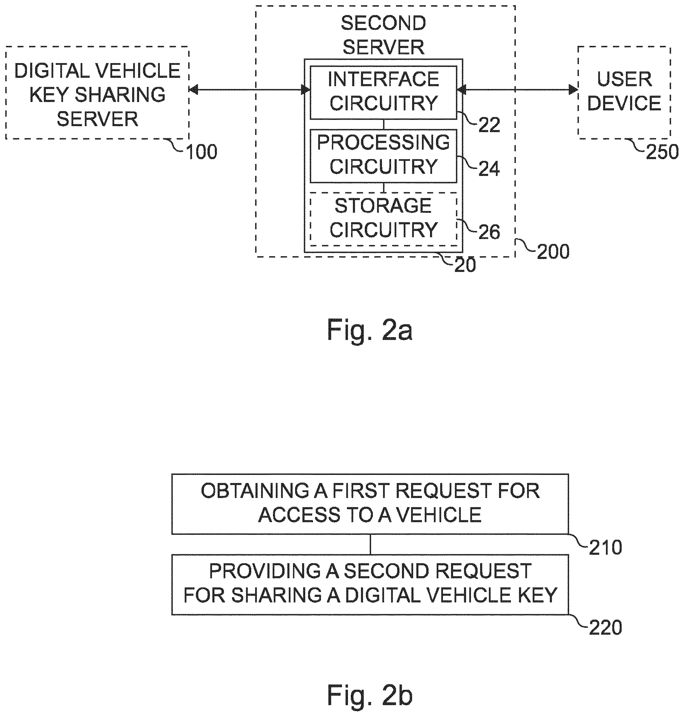

More details and aspects of the apparatus, method, and computer program for the digital vehicle key sharing server and of the digital vehicle key sharing server are mentioned in connection with the proposed concept or one or more examples described above or below (e.g., Fig. 2a to 6). The apparatus, method and computer program for the digital vehicle key sharing server and the digital vehicle key sharing server may comprise one or more additional optional features corresponding to one or more aspects of the proposed concept, or one or more examples described above or below.

Fig. 2a shows a schematic diagram of an example of an apparatus 20 for a second server 200 and of a second server 200 comprising such an apparatus 20. The apparatus 20 comprises circuitry that is configured to provide the functionality of the apparatus 20. For example, the apparatus 20 of Fig. 2a comprises interface circuitry 22, processing circuitry 24 and (optional) storage circuitry 26. For example, the processing circuitry 24 may be coupled with the interface circuitry 22 and with the storage circuitry 26. For example, the processing circuitry 24 may be configured to provide the functionality of the apparatus, in conjunction with the interface circuitry 22 (for exchanging information, e.g., with other devices, such as the digital vehicle key sharing server 100 and/or the user device 250) and the storage circuitry 26 (for storing information, such as machine-readable instructions). In general, the functionality of the processing circuitry 24 may be implemented by the processing circuitry 24 executing machine-readable instructions. Accordingly, any feature ascribed to the processing circuitry 24 may be defined by one or more instructions of a plurality of machine-readable instructions. The apparatus 20 may comprise the machine-readable instructions, e.g., within the storage circuitry 26.

The processing circuitry 24 is configured to obtain, via the interface circuitry 22, a first request for access to a vehicle from the user device 250. The processing circuitry 24 is configured to provide, via the interface circuitry 22, a second request for sharing a digital vehicle key for the vehicle to a digital vehicle key sharing server 100 based on the first request.

Fig.2b shows a flow chart of an example of a corresponding method for the second server. The method comprises obtaining 210 the first request for access to a vehicle from a user device. The method comprises providing 220 the second request for sharing a digital vehicle key for the vehicle to a digital vehicle key sharing server based on the first request. For example, the method may be performed by the second server.

In the following, the features of the apparatus 20, the second server 200 and of the corresponding method (and computer program) are discussed with respect to the apparatus 20. Features introduced in connection with the apparatus 20 may likewise be included in the corresponding second server 200, method and computer program.

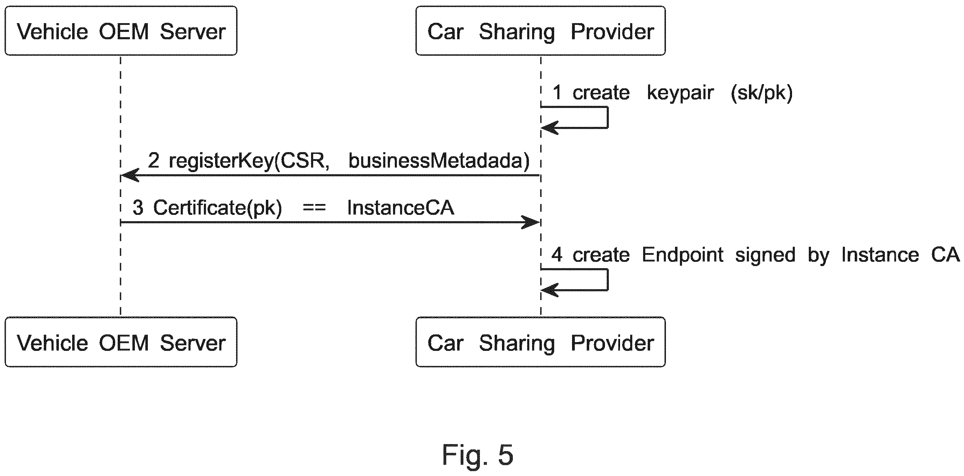

As outlined in connection with Figs. 1a to 1d, after registering the second server at the digital vehicle key sharing server (by storing its public key in the storage of public keys allowed to issue a request for sharing a digital vehicle key, as illustrated in Fig. 5), the second server can also issue such requests, on behalf of its clients. For example, the second server may be a server of a car sharing provider, or a fleet management server, or a server of a parking garage, or a server of a road assistance company etc. This server may now be used, once the owner/sharer of a vehicle has authorized the second server, via the digital vehicle key sharing server, to issue requests for sharing a digital vehicle key, to issue such requests on behalf of its clients, or to delegate the sharing to yet another server.

In various examples, such requests are triggered by the user device, which is to be equipped with such a digital vehicle key, by the user device providing the aforementioned first request for access to a vehicle from a user device 250. In general, such a first request may be received after the user device is registered at the second server, and information on the second device, such as its public key, is stored in a storage of the second server, such as the storage circuitry 26. For example, as shown in Fig. 6, the user device (Sharee in Fig. 6) may first install a corresponding app (a car-sharing app in Fig. 6), create an Instance CA key pair to be used, and then upload the public key of the key pair to the second server (Car Sharing Provider in Fig. 6) as part of its registration. The second server then stores the public key and associates it with the respective user device/client. When the user device then issues the first request (bookVehicle in Fig. 6), the second server can use the stored information, including the stored public key, to generate and provide the second request to the digital vehicle key sharing server. In other words, the processing circuitry may be configured to obtain, via the interface circuitry, a public key of the user device (Action 3 in Fig. 6), the second request comprising the public key of the user device (Action 6 in Fig. 6).

As discussed in connection with Fig. 1d, to invite the user device to have the public key of a digital vehicle key signed / a corresponding certificate being created, the digital vehicle key sharing server provides an invitation to the user device, e.g., directly or via the second server. In the latter case, the processing circuitry may be configured to obtain an invitation (requestKeyResponse(URL) in Fig. 6) to provide a public key of a digital vehicle key of the user device (or attestation comprising the public key) for signing to the digital vehicle key sharing server (from the digital vehicle key sharing server), and to forward the invitation (URLink in Fig. 6) to the user device. From there, the creation and signing of the digital vehicle key may correspond to actions 6 through 22 (with some actions being optional) of Fig. 4. For example, as a next action, the user device can issue the request for signing the public key of the digital vehicle key (signKey Request in Fig. 6).

In some examples, to authenticate vis-à-vis the digital vehicle key sharing server, the processing circuitry may be configured to obtain a signed version (or certificate) of the public key of the second server from the digital vehicle key sharing server (as a result of the registration of the second server at the digital vehicle key sharing server). Further details can be found in connection with Fig. 5. The second server, and thus the processing circuitry, may then use the signed public key / certificate to create a signing endpoint used for authenticating the second server vis-à-vis the digital vehicle key sharing server.

In some examples, the registration of the second server at the digital vehicle key sharing server is not limited to registering (e.g., whitelisting) the public key of the second server at the digital vehicle key sharing server. Instead, or in addition, the second server may be supplied with a valid digital vehicle key. In other words, the processing circuitry may be configured to obtain an invitation for providing a public key of a digital vehicle key (or an attestation comprising the public key) for signing to the digital vehicle key sharing server, to generate such a digital vehicle key (including public key, private key and, optionally, attestation), and providing a request for signing the public key of the digital vehicle key (or the attestation), with the public key or attestation (including the public key) of the digital vehicle key to the digital vehicle key sharing server. In response to said request, the processing circuitry may be configured to obtain the signed public key or attestation from the digital vehicle key sharing server.

The interface circuitry 22 may correspond to one or more inputs and/or outputs for receiving and/or transmitting information, which may be in digital (bit) values according to a specified code, within a module, between modules or between modules of different entities. For example, the interface circuitry 22 may comprise circuitry configured to receive and/or transmit information.

For example, the processing circuitry 24 may be implemented using one or more processing units, one or more processing devices, any means for processing, such as a processor, a computer or a programmable hardware component being operable with accordingly adapted software. In other words, the described function of the processing circuitry 24 may as well be implemented in software, which is then executed on one or more programmable hardware components. Such hardware components may comprise a general-purpose processor, a Digital Signal Processor (DSP), a micro-controller, etc.

For example, the storage circuitry 26 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the apparatus, method, and computer program for the second server and the second server are mentioned in connection with the proposed concept or one or more examples described above or below (e.g., Fig. 1a to 1d, 3a to 6). The apparatus, method, and computer program for the second server and the second server may comprise one or more additional optional features corresponding to one or more aspects of the proposed concept, or one or more examples described above or below.

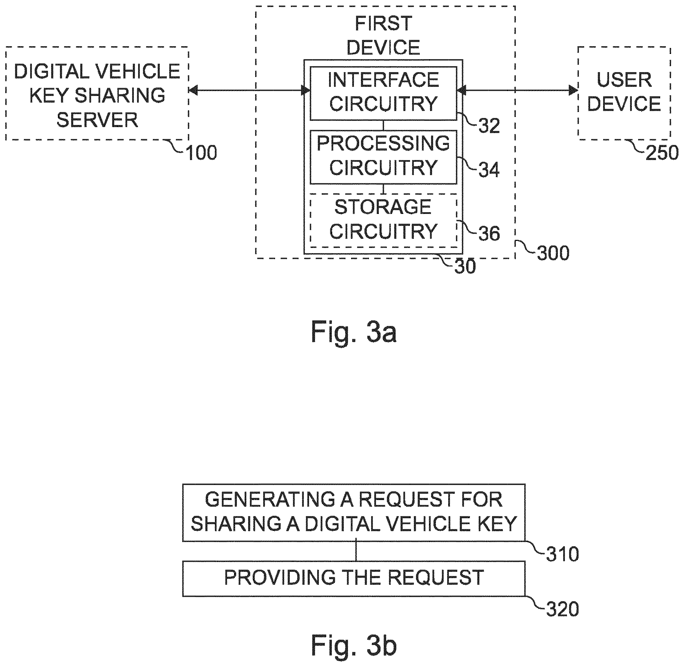

Fig. 3a shows a schematic diagram of an example of an apparatus 30 for a first device 300 and of a first device 300 comprising such an apparatus 30. The apparatus 30 comprises circuitry that is configured to provide the functionality of the apparatus 30. For example, the apparatus 30 of Fig. 3a comprises interface circuitry 32, processing circuitry 34 and (optional) storage circuitry 36. For example, the processing circuitry 34 may be coupled with the interface circuitry 32 and with the storage circuitry 36. For example, the processing circuitry 34 may be configured to provide the functionality of the apparatus, in conjunction with the interface circuitry 32 (for exchanging information, e.g., with other devices, such as the digital vehicle key sharing server 100 and/or the user device 250) and the storage circuitry 36 (for storing information, such as machine-readable instructions). In general, the functionality of the processing circuitry 34 may be implemented by the processing circuitry 34 executing machine-readable instructions. Accordingly, any feature ascribed to the processing circuitry 34 may be defined by one or more instructions of a plurality of machine-readable instructions. The apparatus 30 may comprise the machine-readable instructions, e.g., within the storage circuitry 36.

The processing circuitry 36 is configured to generate a request for sharing a digital vehicle key for one or more vehicles to a second device 200; 250, the request indicating whether the second device specified by the request is a user device or a second server. The processing circuitry is configured to provide the request to a digital vehicle key sharing server 100.

Fig. 3b shows a flow chart of an example of a corresponding method for the first device. The method comprises generating 310 a request for sharing a digital vehicle key for one or more vehicles to a second device, the request indicating whether the second device specified by the request is a user device or a second server. The method comprises providing 320 the request to a digital vehicle key sharing server. For example, the method may be performed by the first device 300.

In the following, the features of the apparatus 30, the first device 300 and of the corresponding method (and computer program) are discussed with respect to the apparatus 30. Features introduced in connection with the apparatus 30 may likewise be included in the corresponding first device 300, method and computer program.

In the proposed concept, the first device 300 is the initiator of the sharing procedure, either directly to the user device, or to delegate sharing rights to the second server. Initially, the first device 300 is the entity holding the right to create a shared digital vehicle key of a vehicle, e.g., as the first device 300 is a user device of the Sharer / owner of the vehicle that is paired with the vehicle. To distinguish the aforementioned two cases, the processing circuitry is configured to generate the respective request such, that the request indicates whether the second device specified by the request is a user device or a second server. As shown in connection with Fig. 4, a "DeviceProfile" tag can be included in the request, with the tag having the two possible values "device" and "server". The request may further comprise additional pieces of information, such as information on the one or more vehicles being shared and information on the second device (including the public key of the second device, for purposes of verification of the second device and/or generation of a signed version/certificate of the public key for authentication purposes). More information on possible fields of the request are discussed in connection with Fig. 4, and in particular action 1 of Fig. 4.

In case the second device is a user device (or in some cases even if the second device is a server), at least some part of the communication between the digital vehicle key sharing server and the second device may be performed via the first device. In particular, as shown in Fig. 4, the processing circuitry may be configured to obtain, from the digital vehicle key sharing server, an invitation to provide a public key of a digital vehicle key (or an attestation comprising such a public key) of the user device (or second server) for signing to the digital vehicle key sharing server, and to forward the invitation to the second device / user device (actions 4 and 5 of Fig. 4, for example). For example, the invitation may be shared using a messaging protocol or via an application of the vehicle Original Equipment Manufacturer (OEM).

The interface circuitry 32 may correspond to one or more inputs and/or outputs for receiving and/or transmitting information, which may be in digital (bit) values according to a specified code, within a module, between modules or between modules of different entities. For example, the interface circuitry 32 may comprise circuitry configured to receive and/or transmit information.

For example, the processing circuitry 34 may be implemented using one or more processing units, one or more processing devices, any means for processing, such as a processor, a computer or a programmable hardware component being operable with accordingly adapted software. In other words, the described function of the processing circuitry 34 may as well be implemented in software, which is then executed on one or more programmable hardware components. Such hardware components may comprise a general-purpose processor, a Digital Signal Processor (DSP), a micro-controller, etc.

For example, the storage circuitry 36 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the apparatus, method, and computer program for the first device and the first device are mentioned in connection with the proposed concept or one or more examples described above or below (e.g., Fig. 1a to 2b, 4 to 6). The apparatus, method, and computer program for the first device and the first device may comprise one or more additional optional features corresponding to one or more aspects of the proposed concept, or one or more examples described above or below.

Various examples of the present disclosure relate to a concept for server based key sharing of digital keys. In the proposed concept, no paired owner (i.e., Sharer) may be required for key sharing. Instead, or in addition to the paired owner, key sharing may be done by a server instance (i.e., the digital vehicle key sharing server, denoted Vehicle OEM Server in the following). The Vehicle OEM Server may enable key sharing between devices, between servers and devices and the authorization of servers for sharing of keys for single or several vehicleIdentifiers (e.g., for purposes such as a fleet Management server, garages, road assistance and such).

The public key to verify the signature of the Vehicle OEM Server over the shared keys may be known to the vehicle (e.g., stored in the Secure Element of the vehicle).

A requesting instance (further called Sharer), which can be a user device (phone, watch, etc..) or a server, may request a shared key at the key management server (i.e., Vehicle OEM Server / digital vehicle key sharing server) by giving information about the key properties and the recipient of the key (further called Sharee, i.e., the second device). For example, the Sharee can be a user device (phone, watch, etc..) or a server. The Sharer may be known to the key management server by their endpoints public key.

In case of the Sharee being a server, no digital key might be created (at the time). Instead, the Sharee.InstanceCA-public key (i.e., the public key of the second server) may be be whitelisted in the Vehicle OEM Server (i.e., added to the storage comprising one or more public keys allowed to issue a request for sharing a digital vehicle key) for being allowed to request shared keys for the requested vehicleldentifier.

In the proposed concept, the Vehicle OEM Server may create the key creation request that is sent to the Sharee. The Sharee may create a digital key and send a key signing request. After receiving the key signing request from the Sharee, the Vehicle OEM Server may sign it with its endpoint private key. As the endpoints public key of the vehicle OEM server is known in the vehicle, the vehicle can then verify the legitimacy of the shared key and allow access to the vehicle.

In the following, an example implementation of sharing of a digital vehicle key via a digital vehicle key sharing server (in the following denoted "Vehicle OEM server", with OEM being the Original Equipment Manufacturer, such as the car manufacturer) is given.

In the example, the Vehicle OEM Server enables key sharing between devices, between servers and devices and the authorization of servers for sharing of keys for single or several vehicleIdentifiers (e.g., Fleet Management server, Garages, Road Assistance, and such), i.e., for one or more vehicles. For authorizing a server (i.e., the second server) as potential Sharer a public key of the server is transmitted to the Vehicle OEM Server. The Vehicle OEM Server may maintain a database of vehicleldentifiers (representing corresponding vehicles) the authorized public key is allowed to request keys for. Buildup and maintenance of the database is out of scope of this disclosure.

Increased security during key sharing can be achieved by Sharee (i.e., user device) verification before signing the shared key. For this, the Vehicle OEM Server can compare hashes of the Account ID of the intended recipient of the Sharer with the actual receiver of the digital key, for example, or use the hash of a phone number or a public key of the Sharee for this purpose.

The key sharing via Vehicle OEM Server is described in detail in the following sequence diagram. Fig. 4 shows a sequence diagram of an example of server-based key sharing to a user device. In the sequence diagram Fig. 4, five entities are shown: The sharer (which can be the first device or the second server), the Vehicle OEM server (i.e., the digital vehicle key sharing server), an optional Relay Server (which is an optional communication intermediary between the Vehicle OEM server and the Sharee), the Sharee (i.e., the user device), and an optional KTS (Key Tracking Server).

In the following, actions 1 through 22 shown in Fig. 4 are introduced in more detail. As will become evident, at least some of these actions are optional.

In action 1 (requesting sharing, i.e., providing the request for sharing a digital vehicle key), the Sharer sends information necessary for key creation to the Vehicle OEM Server. If the Instance CA public key (i.e., the public key of the Sharee) is known to the Sharer (e.g., preestablished trust relationship or trusted server lookup), the Sharer may add the ShareeInstanceCaPk (i.e., the public key of the Sharee) to the request. The Sharer can optionally request the usage of a 2nd factor for activating the shared key by setting the activationRequired flag. If the sharing is destined to a Server instance (i.e., if the request indicates that the second device is a server, to enable a Sharee for delegated sharing), a tag (denoted "DeviceProfile" in the following) indicating that the Sharee is a server may be included in the request. The Sharer may specify a designated Relay Server to be used within the sharing. The request may be signed by the Sharer, e.g., according to an arbitrary data attestation with the Sharer key (i.e., the private key of the Sharer) using arbitrary data, such as a SHA-256 hash value of the request. For example, the request may comprise one or more of the following fields: a field comprising one or more vehicle identifiers of the one or more vehicles to be shared, a key configuration information field, a server key field, an activation required field, a device pin field, a maximum number of device pin attempts field, a Sharee one-time account identifier hash field, a field comprising a nonce used for Sharee one-time account identifier hash creation, a Sharee phone number Hash field, a field comprising a nonce used for Sharee phone number hash creation, and a Sharee Instance CA public key field (i.e., the public key of the Sharee). The latter entries may be used for Sharee authentication.

The request, including one or more of the above fields, may be signed with a private key of the Sharer, and the signature may be transmitted together with the request.

In actions 2 to 4 (Creating Key Creation Request), in case the Sharer sent the ShareeInstanceCaPk, the Vehicle OEM Server may store the key for future requests for sharing keys of the according vehicleldentifier. If DeviceProfile was set to "Server" (i.e., if the second device is a server), in some examples the Vehicle OEM Server might only send the requestKeyResponse() message (without actions 2 and 3) and the process may be terminated. Alternatively, the entire process may be completed, including providing a representation of a Digital Key to the Sharee being a Server.

At least if the DeviceProfile is set to "Device" (i.e., user device), and in some examples also if the DeviceProfile is set to "Server", the Vehicle OEM Server may create the Key Creation Request (Including DeviceProfile and maximum number of allowed shares). If a Relay Server is used as an intermediary between the Vehicle OEM Server and the Sharee, a Secret may be generated, that is used to encrypt the payload for the CreateMailbox API as described in Internet Engineering Task Force (IETF): Secure Credential Transfer - draft-secure-credential-transfer-03. The Vehicle OEM Server may send the createMailbox request to the Relay Server. After receiving the Mailbox Link, the Vehicle OEM Server may send the response requestKeyResponse to the Sharer device.

In actions 5 to 8 (Key creation), the Sharer may forward the invitation to the Sharee. After downloading the Key Creation Request, the Sharee may create the digital key. The Sharee may create the Signing Request (i.e., the request for signing the public key of the digital vehicle key), including the ShareeInstanceCaPk (i.e., the public key of the Sharee) and upload it to the Mailbox of the Relay Server.

In actions 9 to 13 (key signing), after downloading the Key Signing Request from the Relay Server, the Vehicle OEM Server may optionally compare the ShareeOneTimeAccountIdHash or ShareeInstanceCaPk contained in the Signing Request with the one received from the Sharer in the requestKey request. If both keys match, the Vehicle OEM Server may sign the key (i.e., the public key of the digital vehicle key) and create the Import Request. The Vehicle OEM Server may upload the Import Request to the Mailbox of the Relay Server.

In actions 14 to 17 (importing key data), the Sharee may download the Import Request and request the deletion of the Mailbox of the Relay Server (if a Relay Server is being used for communication).

In actions 18 to 20 (optional key tracking), if key tracking is required, the Sharee may request a signed attestation from the Key Tracking Server. Optionally the Key Tracking Server may notify the Vehicle OEM Server about the successful key tracking.

In action 21 (notifying the Sharer), the Vehicle OEM Server may notify the Sharer about the successful key sharing either after uploading the Import Request to the Relay Server or after optional Key Tracking.

In some examples, secure Sharee verification may be performed. For example, the verification may be performed via device OEM account identifier hash. For increased security during key sharing, the Vehicle OEM Server may optionally compare identity information of the intended recipient of the Sharer with the actual receiver of the digital key. For example, the identity information may be one of the following: An account identifier hash, a phone number hash, and the public key of the Sharee.

For example, the Sharer may to request a one-time hash of the Account ID hash of the intended Sharee at an account database server (in the following example this will be the device OEM server, both Sharer and Sharee belonging to the same Device OEM). The Account Database server may select a nonce that may be added to the Account ID hashing to anonymize the ID. The nonce may be shared with the Sharer and forwarded to the Vehicle OEM Server. With the Account ID hash included in the Instance CA Certificate (i.e., the public key of the Sharee) sent by the Sharee in the key Signing Request, the Vehicle OEM Server can then recalculate the one-time Account ID hash and compare it with the one received with the requestKey request from the Sharer.

In the following, an example implementation of delegated key sharing (i.e., key sharing via a second server) is presented. Such delegated sharing may enable consumer-to-business (enabling a third-party service provider to share keys for a privately owned vehicle) and business-to-consumer use cases (a third-party service provider sharing keys to customers or employees for privately owned cars or cars in a commercial fleet). To enable a third-party service provider (e.g., car sharing, garage, or road assistance, etc.) to issue keys for certain vehicles to its subscribers/customers, the public key of the provider's server (i.e., the public key of the second server) may be registered with the Vehicle OEM Server (i.e., the digital vehicle key sharing server). After registering, the Service Provider may hold an Instance CA Certificate over its public key signed by the Vehicle OEM Server (i.e., the signature of the signed public key of the second server). The Instance CA Certificate may be used by the service provider to create an Endpoint Certificate that may be used to sign the Online Sharing Requests (i.e., the second request for sharing a digital vehicle key)) when sending RequestKey messages to the Vehicle OEM Server.

Once registered, a holder of a digital key with respective sharing rights can choose to allow that service provider to request keys for the vehicle associated with the digital key of the holder. This can be done by selecting the Service Provider from a list provided by the Vehicle OEM in an application or web interface. The process of registering the public key is out of scope of this disclosure but an example will be given for completeness in the following section.

To register a third-party service provider server (i.e., the second server), and thus to obtain an Instance CA Certificate for the service provider server is by creating a keypair and sending a Certificate signing request (CSR) to the Vehicle OEM Server. This is shown in the following sequence as an example of registering a car sharing provider. Fig. 5 shows a sequence diagram of an example of registering a car sharing server at a digital vehicle key sharing server. As shown in Fig. 5, the server of the car sharing provider may, at action (1), create a key pair (comprising a secret/private key (sk) and a public key (pk), and at action (2) register the public key at the Vehicle OEM server. The Vehicle OEM may, at action (3), generate a certificate based on the public key (i.e., "sign" the public key), which may be used as InstanceCA for the server of the carsharing provider, and provide the certificate to the server of the car sharing provider. At (4), the server of the car sharing provider may create an endpoint signed by the Instance CA. The third-party service provide may create an Endpoint signed by the Instance CA that will be used to sign the requestKey request.

In the present disclosure, an Endpoint is the end of a certificate chain. The goal of the certificate chain is to allow a Sharer's or key management server's Secure Element (SE) to verify that a Sharee's endpoint is authorized to participate in the sharing protocol. This verification is required to make sure that the Sharee key pair has actually been generated on an approved SE, and to ensure that any secret data transferred from Sharer's confidential mailbox to a Sharee's confidential mailbox is handled appropriately. Each Sharer endpoint may contain one or several authorized public keys (authorized_PK) set by the vehicle during the owner/sharer pairing process. The authorized_PK list contains, at a minimum, the public key of the Vehicle OEM CA. The External CA is typically the Device OEM CA used to issue the Instance CA Certificate of digital key applet. The Instance CA in turn issues the endpoint certificates. The verification of the endpoint of the Sharee is handled through the following verification chain. Each element to the right of the arrow is attested by the element before it: Authorized CA (Vehicle OEM CA)-> External CA (Device OEM CA), -> Instance CA, -> Endpoint -> Endpoint Encryption Key.

The Sharer can authorize a server of a third-party service provider to issue keys for their vehicle, by sharing a key to the server. When sending the requestSharing request, the Sharer may set the ServerKey Flag (by setting the DeviceProfile to "Server") and include the public key of the service provider (i.e., the public key of the second server).

Once the Sharee server is registered at the Vehicle OEM Server, the trusted Sharee server may issue keys to Sharee. An authorized third-party service provider may request keys for its customers/employees by sending their public key as Sharee information (i.e., as part of the second request for sharing a digital vehicle key) to the Vehicle OEM Server. This allows the Vehicle OEM Server to verify the recipient of the key before signing the shared key.

The public key of the Sharee may be known to the third-party service provider before requesting a key, the process of sending the public key to the third-party service provider and forwarding the sharing URL to the Sharee device are out of scope of this disclosure but will be included for completeness in the sequence shown in Fig. 6. Fig. 6 shows a sequence diagram of an abbreviated example of server-based key sharing to a user device via car sharing server.

In actions 1 to 3, the service provider obtains the public key of the Sharee. For example, the application of the third-party service provider installed on the device of the recipient of the shared key may request the Instance CA from the native OS when creating the booking or installing a third-party provider app and sends it to the server of the Service Provider.

In actions 4 to 7 (forwarding mailbox Uniform Resource Locator, URL), the service provider server creates the requestKey request and signs it with the Endpoint Secret Key (which is signed by the pre-registered Instance CA). The request (i.e., the second request for sharing a digital vehicle key) may hold the public key of the Sharee device, which may be used by the Vehicle OEM Server to verify the recipient of the shared key before signing it. The URL (i.e., the invitation) received from the Vehicle OEM Server may be forwarded to the App on the Sharee device.

In actions 8 to 11 (creation and signing of the shared key), the key is created on the Sharee device and the key signing request is sent to the Vehicle OEM Server. By comparing the public key of the Instance CA in the key signing request from the Sharee with the public key received with the requestKey request from the Sharer, the Vehicle OEM Server may verify the legitimacy of the created key. If both keys match, the Vehicle OEM Server may sign the key and send the Import Request to the Sharee device.

In the following, some examples are given for the entities mentioned above.

For example, the Vehicle OEM Server may host the Sharer account that links to the Sharer's vehicle(s). It may sign a shared digital key structure for acceptance by vehicle, assuring that business policies are checked, and digital keys are tracked. It may provide necessary attestations to the vehicle (when online) so that shared Sharee digital keys are accepted by the vehicle in the first Sharee transaction. It may sign the vehicle public key. It may provide necessary certificates to Device OEMs. It may provide Vehicle OEM and (optionally) Device OEM public keys to the vehicle for Sharer pairing and Sharee sharing. It may have a trust relation with the Sharer (based on a Public Key Infrastructure, PKI). It may issue shared keys. It may manage Relay Server mailbox links for digital key distribution. It may verify the correct recipient of shared keys.

(User) devices may contain a secure processing and storage environment (secure element, secure enclave, trusted execution environment or equivalent) running a digital key applet. It may take on the role of a Sharer device and Sharee device. A sharer device may implement features such as digital key sharing and store the necessary certificates. A sharer may be any entity with a trust relation (based on PKI) with the Vehicle OEM Server, including sharer devices and sharer servers. A Sharee device may implement features such as digital key sharing (as receiver) and store the necessary certificates.

The third-party service provider server (i.e., the second server) may be pre-registered with the Vehicle OEM Server, and be authorized by a sharer key (or by an administrator). It may initiate digital key sharing to other participants.

The relay server may provide a standardized communication channel to support key sharing between two devices from different (or the same) OEMs. It may implement push notifications and supports polling mechanisms to keep devices informed during the key sharing process.

The digital key system is based on signature verification using asymmetric cryptography. The vehicle unlocks the doors or starts the engine only if a challenge has been signed with a private key corresponding to a public key registered in the vehicle.

After the Sharer device and the vehicle have been paired, the Sharer possesses a private key for which the corresponding public key is stored in the vehicle. For sharing keys via the Vehicle OEM Server, the Vehicle OEM Server public key may be registered in the vehicle during the production process or when configuring the vehicle software for digital key usage.

To allow shared keys to access the vehicle, the Sharer or Vehicle OEM Server may use their private key to sign Sharee's public keys. On presentation of the Sharer's or Vehicle OEM Server's signature over the Sharee's public key, the vehicle may in turn accept the shared key as a new vehicle user and store the Sharee's public key. To initiate the Vehicle OEM Server to use their private key for signing a Sharee's public key, the device may authorize the OEM Server.

Digital key sharing may comprise the Sharer sending an invitation URL to the Sharee and a stateful exchange of key creation, key signing, and data import requests. When a secure sharing channel, such as a device OEM-controlled proprietary messaging channel, is used, then invitation and stateful sharing messages can all be sent across this channel.

In general, the digital key may comprise various elements. These elements may comprise one or more of a vehicle identifier (for uniquely identifying the vehicle), an endpoint identifier (for device-internal key management) and a digital key identifier, an Instance CA Identifier (of the instance that has signed the digital key).

Before signing the Sharee's public key, the Sharer may verify that the Sharee's public key pair has been created on an eligible SE. The verification chain starts with an authorized public key in the Sharer digital key structure, which has been provided and is trusted by the vehicle, e.g., the Vehicle OEM CA public key. Shared digital keys may further comprise an attestation package comprising the Sharee public key (signed by the Sharer/Vehicle OEM Server) and information on a validity of the shared digital key.

The proposed concept may be used by vehicle manufacturers, (smart) device manufacturers, car sharing providers, third-party service providers (road assistance, valet parking, etc.) and other parties concerned with digital car keys.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for a digital vehicle key sharing server (100), the apparatus comprising interface circuitry (12) and processing circuitry (14) configured to:
obtain, via the interface circuitry, a request for sharing a digital vehicle key for one or more vehicles to a second device (200; 250) from a first device (300);
determine, whether the second device specified by the request is a user device (250) or a server (200); and
process the request for sharing the digital vehicle key based on whether the second device specified by the request is a user device or a server.

2. The apparatus according to claim 1, wherein the processing circuitry is configured to verify the request for sharing a digital vehicle key based on a public key of the first device contained in a storage comprising one or more public keys allowed to issue a request for sharing a digital vehicle key for the one or more vehicles.

3. The apparatus according to claim 2, wherein the processing circuitry is configured to, if the second device is a server, add a public key of the second device to the storage comprising one or more public keys allowed to issue a request for sharing a digital vehicle key.

4. The apparatus according to claim 3, wherein the processing circuitry is configured to, if the second device is a server, sign the public key of the second device using a private key of the digital vehicle key sharing server, and provide the signed public key of the second device to the second device for future authentication.

5. The apparatus according to one of the claims 1 to 4, wherein the processing circuitry is configured to obtain, via the interface circuitry, a second request for sharing a digital vehicle key for a vehicle to a user device from the second device being a server, and to provide to the user device, via the second device or directly, an invitation to provide a public key of a digital vehicle key for signing to the digital vehicle key sharing server.

6. The apparatus according to one of the claims 1 to 5, wherein the processing circuitry is configured to provide to the second device, via the first device or directly, an invitation to provide a public key of a digital vehicle key for signing to the digital vehicle key sharing server.

7. The apparatus according to one of the claims 5 or 6, wherein the processing circuitry is configured to obtain, via the interface circuitry, a request for signing the public key of the digital vehicle key from the second device, sign the public key of the digital vehicle key using a private key of the digital vehicle key sharing server, and provide the signed public key of the digital vehicle key to the second device.

8. The apparatus according to claim 7, wherein the request for signing the public key of the digital vehicle key is obtained in response to the invitation to provide the public key of the digital vehicle key.

9. The apparatus according to one of the claims 7 or 8, wherein the request for sharing a digital vehicle key comprises authentication verification information, wherein the processing circuitry is configured to verify the request for signing the public key of the digital vehicle key based on the authentication verification information.

10. An apparatus (20) for a second server (200), the apparatus comprising interface circuitry (22) and processing circuitry (24) configured to:
obtain, via the interface circuitry, a first request for access to a vehicle from a user device (250);
provide a second request for sharing a digital vehicle key for the vehicle to a digital vehicle key sharing server (100) based on the first request.

11. An apparatus for a first device (300), the apparatus comprising interface circuitry (32) and processing circuitry (34) configured to:
generate a request for sharing a digital vehicle key for one or more vehicles to a second device (200; 250), the request indicating whether the second device specified by the request is a user device or a server;
provide the request to a digital vehicle key sharing server (100).

12. A method for a digital vehicle key sharing server (100), the method comprising:
obtaining (110) a request for sharing a digital vehicle key for one or more vehicles to a second device from a first device;
determining (120), whether the second device specified by the request is a user device or a server; and
processing (130) the request for sharing the digital vehicle key based on whether the second device specified by the request is a user device or a server.

13. A method for a second server (200), the method comprising:
obtaining (210) a first request for access to a vehicle from a user device;
providing (220) a second request for sharing a digital vehicle key for the vehicle to a digital vehicle key sharing server based on the first request.

14. A method for a first device (300), the method comprising:
generating (310) a request for sharing a digital vehicle key for one or more vehicles to a second device, the request indicating whether the second device specified by the request is a user device or a server;
providing (320) the request to a digital vehicle key sharing server.

15. A computer program having a program code for performing the method of claim 12, the method of claim 13 or the method of claim 14, when the computer program is executed on a computer, a processor, or a programmable hardware component.
